# FASCICULE DE BREVET EUROPEEN

(11) **EP 0 937 111 B1**
(45) Date de publication et mention de la délivrance du brevet: **28.01.2004**
(21) Numéro de dépôt: 97913251.1
(22) Date de dépôt: 05.11.1997
(51) Int. Cl.: C08G 18/61, C08G 18/62

(54) **COMPOSITIONS RETICULABLES CONTENANT DES HUILES SILICONES FONCTIONNALISEES ET UTILISATION DE CES COMPOSITIONS POUR PREPARER DES FILMS POLYURETHANNES**
VERNETZBARE ZUSAMMENSETZUNGEN, DIE FUNKTIONALISIERTE SILICONÖLE ENTHALTEN UND VERWENDUNG DIESER ZUSAMMENSETZUNGEN ZUM HERSTELLEN VON POLYURETHANFILMEN
CROSS-LINKABLE COMPOSITIONS CONTAINING FUNCTIONALIZED SILICON FLUIDS AND USE OF THESE COMPOSITIONS FOR PREPARING POLYURETHANE FILMS

(30) Priorité: 08.11.1996 FR 9613638; 30.04.1997 FR 9705350
(43) Date de publication de la demande: 25.08.1999
(73) Titulaire: RHODIA CHIMIE, 92408 Courbevoie Cédex (FR)
(72) Inventeur: BRANLARD, Paul, F-69005 Lyon (FR); GUENNOUNI, Nathalie, F-69200 Venissieux (FR); KARRER, Philippe, F-68200 Mulhouse-Bourtzwiller (FR); MIGNANI, Gérard, F-69008 Lyon (FR)
(86) Numéro de dépôt international: PCT/FR1997/001979
(87) Numéro de publication internationale: WO 1998/021257

(56) Documents cités:
- EP-B- 0 531 463
- WO-A-90/06958
- US-A- 4 369 300

## Description

La présente invention a pour objet de nouvelles compositions réticulables pour former de nouveaux films polyuréthannes contenant des huiles silicones fonctionnalisées, et l'utilisation des nouveaux films polyuréthannes en tant que revêtement protecteur, notamment pour les carrosseries d'automobiles, les coques de bateaux; les corps d'articles et appareils ménagers ou toute autre surface.

Les revêtements protecteurs doivent posséder de nombreuses qualités alliant aussi bien des aspects esthétiques et visuels que des propriétés de résistance aux influences externes. Un premier critère fondamental d'efficacité pour les revêtements protecteurs est la capacité à la résistance aux acides, notamment dans le cas de peintures ou laques automobiles; celles-ci doivent être résistantes à l'action des pluies acides. Un deuxième critère fondamental d'efficacité se situe au niveau des qualités hydrophobes qui doivent bien entendu être élevées. Un troisième critère fondamental est la résistance aux contraintes mécaniques telle que la résistance à la rayure.

De nombreuses compositions de revêtements ou de peintures contenant des huiles silicones ont été proposées. On notera notamment les compositions du brevet US N°5268215 ou celles du brevet EP 531 463; toutefois, celles-ci ne présentent pas toutes les qualités requises permettant d'obtenir des protections stables et durables dans le temps. En outre, ces compositions nécessitent parfois une mise en oeuvre rigoureuse et complexe pour une application ne garantissant pas une efficacité minimum.

La présente invention a pour objet de fournir de nouvelles compositions réticulables pour former des films polyuréthannes. Ces nouvelles compositions réticulables qui contiennent des huiles silicones fonctionnalisées ont des qualités, évaluées selon les critères ci-dessus, améliorées par rapport aux compositions connues de l'art antérieur. En outre, les nouvelles compositions réticulables sont de préparation relativement rapide et d'utilisation aisée.

On observe pour les nouveaux films polyuréthannes issus des compositions réticulables de rinvention une nette amélioration en qualité et stabilité des propriétés de résistance aux acides, des propriétés de résistance aux contraintes mécaniques telles que la résistance à la rayure, et des propriétés hydrophobes.

Les nouvelles compositions réticulables selon l'invention comprennent :
(a) 20 à 50% en poids de polyisocyanate,
(b) 50 à 80% en poids d'oligomère acrylique contenant des groupements hydroxyles dont la teneur en poids par rapport à l'oligomère acrylique est comprise entre 2,5 et 4, 5%,
(c) 1 à 10% en poids d'une huile silicone de formule (I) : 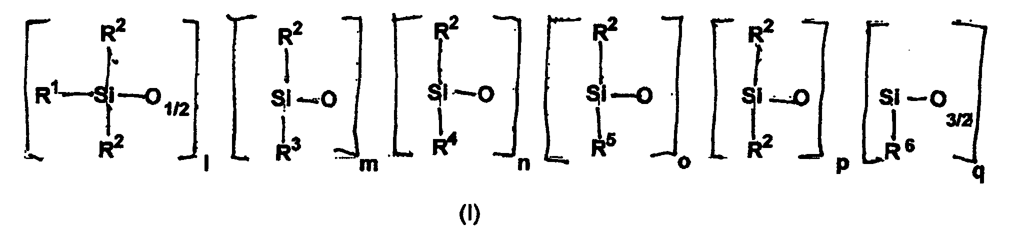
dans laquelle :
(1) o et p sont des nombres entiers identiques ou différents compris entre 1 à 100, et de préférence de 1 à 50,
(2) l représente un nombre entier tel que l =2 + q,
(3) q représente un nombre entier compris entre 0 et 10,
(4) m représente un nombre entier compris entre 1 et 60, de préférence entre 1 et 30, particulièrement de préférence de 1 à 10,
(5) n est un nombre entier tel que 20 < (100 x m)/(m + n) < 60, de préférence 25 < (100 x m)/(m + n) < 55,
(6) les symboles R¹ et R² sont identiques et/ou différents et représentent un radical hydrocarboné choisi parmi les radicaux alkyles linéaires ou ramifiés ayant de 1 à 4 atomes de carbone, les radicaux alkoxy linéaires ou ramifiés ayant de 1 à 4 atomes de carbone, les radicaux aryles, les radicaux alkylaryles et de préférence, un radical méthyle, un radical phényle, un radical méthoxy ou un radical éthoxy,
(7) les symboles R³ et R⁴ sont identiques et/ou différents et sont choisis parmi :
   - les radicaux monovalents -(CH₂)ₕ-Si-(R¹)₃ où h est compris entre 1 et 10, de préférence de 1 à 3,
   - les radicaux monovalents alkylaryles aromatiques, la partie alkyle linéaire ou ramifiée contenant 1 à 4 atomes de carbone, de préférence le symbole R³ représentant le radical monovalent -CH(CH₃)C₆H₅ et le symbole R⁴ représentant le radical monovalent -CH₂CH₂C₆H₅, le taux de motifs Si modifiés de l'huile silicone par ces groupements variant de 20 à 40%,
(8) les symboles R⁵ et R⁶ sont identiques et/ou différents et représentent un groupe fonctionnel monovalent choisi parmi :
   - une amine primaire monovalente de type -R⁷-NH₂ où R⁷ est un radical alkyle linéaire, ramifié ou Cyclique ayant de 1 à 6 atomes de carbone,
   - une amine secondaire monovalente de type -R⁸-NH-R⁹ où R⁸ et R⁹, identiques et/ou différents, sont des chaînes alkyles linéaires, ramifiées ou cycliques, ayant de 1 à 6 atomes de carbone,
   - un radical monovalent -(CH₂)ₐ(NHCH₂CH₂)_{b}NH₂ où c et d sont des nombres entiers indépendants :
      · a est compris entre 1 et 10, de préférence 1 à 3,
      · b est compris entre 0 et 10, de préférence 0 à 1,
   - un radical monovalent -(CH₂)_{c}(OCH₂CH₂)_{d}(OCH₂CHCH₃)ₑOH où c, d et e sont des nombres entiers indépendants :
      · c est compris entre 1 et 20, de préférence 1 à 10,
      · d est compris entre 0 et 70, de préférence 0 à 12,
      · e est compris entre 0 et 70, de préférence 0 à 15,
   - un radical monovalent -(CH₂)_{f}SH où f est un nombre entier pouvant aller de 1 à 10, de préférence de 1 à 3,
   - un radical monovalent -(CH₂)_{g}-C(R')₂-OH où g est un nombre entier pouvant aller de 1 à 10 et de préférence de 1 à 3, et R' représente un radical hydrocarboné choisi parmi un radical alkyle linéaire ou ramifié ayant de 1 à 4 atomes de carbone, les radicaux aryles et les radicaux alkylaryles.

Les valeurs de pourcentages pondéraux concernant les composés (a), (b) et (c) se rapportent à la teneur en matière solide totale de la composition réticulable, i.e. la matière solide des trois composés (a), (b) et (c).

Selon un mode avantageux en accord avec l'invention, les propriétés de résistance à la rayure sont optimisées avec une composition réticulable comprenant (a) 20 à 40% en poids de polyisocyanate, de préférence 30%, (b) 60 à 80% en poids d'oligomère acrylique hydroxylé, de préférence 70%, et (c) 1 à 4% en poids d'une huile silicone de formule (I), de préférence 2 à 3%, tel que le rapport molaire NCOIXH des films polyuréthannes soit compris entre 0,5 et 2 et de préférence entre 0,80 et 1,1. NCO est la fonction isocyenate du polyisocyanate et XH représente OH, NH et SH qui sont les fonctions réactives du polymère acrylique et ceux de l'huile silicone fonctionnalisée.

En général l'oligomère acrylique contient entre 0,1 et 10% en poids de groupements hydroxyles. Avantageusement, ce pourcentage de groupements hydroxylés est compris entre 1 et 6% et plus particulièrement entre 2,5 et 4,5%. La composition réticulable contient généralement un solvant tel que le pourcentage en poids des composés (a), (b) et (c) par rapport à la composition réticulable contenant un solvant soit compris entre 40 et 80%, et de préférence de l'ordre de 50 à 60%. Différents types de solvants peuvent être utilisés, par exemple la méthylamylcétone, l'acétate de butyle ou le produit Solvesso 100 (issu d'une coupe pétrolière).

La structure de l'huile silicone contenue dans la composition selon l'invention est choisie telle que ladite huile soit faiblement miscible au système constitué principalement du mélange d'oligomère acrylique et de polyisocyanate. A ce sujet, la présence des groupements 2-phényléthyl et 1-phényléthyl au sein de la structure de l'huile silicone contrôle le degré de miscibilité de la chaîne de l'huile silicone dans le système oligomère acrylique et polyisocyanate. Le taux de motifs Si modifiés de l'huile silicone par ces groupements varie de 20 à 40%.

En outre, selon un autre mode avantageux de l'invention, la composition réticulable comprend des huiles silicones fonctionnalisées avec des motifs de type HALS. Dans ce cas, au moins une partie des symboles R⁵ et R⁶, semblables et/ou différents de l'huile silicone, représentent un groupe fonctionnel monovalent choisi parmi un reste de formule (II) définie ci-après et tel que le rapport nombre de groupes fonctionnels de formule (II)/nombre de motifs Si de l'huile silicone soit compris entre 5 et 15% : 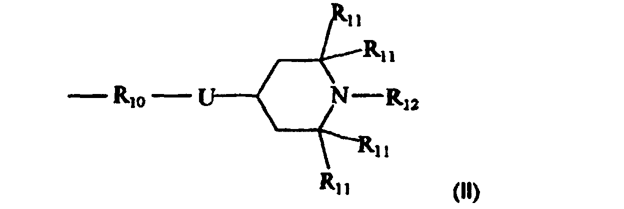 dans laquelle :
(1) les radicaux monovalents R¹¹ sont identiques et/ou différents, choisis parmi les radicaux alkyles linéaires ou ramifiés ayant 1 à 3 atomes de carbone et le radical phényle,
(2) le radical monovalent R¹² représente un radical hydrogène,
(3) le radical R¹⁰ est un radical hydrocarboné divalent choisi parmi :
   ◆ les radicaux alkylènes linéaires ou ramifiés, ayant 2 à 18 atomes de carbone,
   ◆ les radicaux alkylènes-carbonyles dont la partie alkylène linéaire ou ramifiée, comporte 2 à 20 atomes de carbone,
   ◆ les radicaux alkylènes-cyclohexylènes dont la partie alkylène linéaire ou ramifiée, comporte 2 à 12 atomes de carbone et la partie cyclohexylène comporte un groupement OH et éventuellement 1 ou 2 radicaux alkyles ayant 1 à 4 atomes de carbone,
   ◆ les radicaux de formule -R¹³ - O - R¹³ dans laquelle les radicaux R¹³ identiques ou différents représentent des radicaux alkylènes ayant 1 à 12 atomes de carbone,
   ◆ les radicaux de formule -R¹³-O-R¹³ dans laquelle les radicaux R¹³ ont les significations indiquées précédemment et l'un d'entre eux ou les deux sont substitués par un ou deux groupement(s) -OH;
   ◆ les radicaux de formule -R¹³-COO-R¹³ dans laquelle les radicaux R¹³ ont les significations indiquées précédemment,
   ◆ les radicaux de formule -R¹⁴-O-R¹⁵-O-CO-R¹⁴ dans laquelle les radicaux R¹⁴ et R¹⁵ identiques et/ou différents, représentent des radicaux alkylènes ayant 2 à 12 atomes de carbone et le radical R¹⁰ est éventuellement substitué par un radical hydroxyle,
   ◆ U représente -O- ou -NR¹⁶-, R¹⁶ étant un radical choisi parmi un atome d'hydrogène, un radical alkyle linéaire ou ramifié comportant 1 à 6 atomes de carbone et un radical divalent de formule (III) : 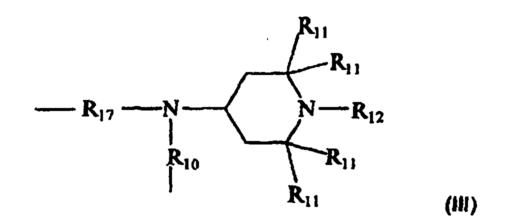 dans laquelle R¹⁰ a la signification indiquée précédemment, R¹¹ et R¹² ont les significations indiquées précédemment et R¹⁷ représente un radical divalent alkylène, linéaire ou ramifié, ayant de 1 à 12 atomes de carbone, l'un des liens valentiels (celui de R¹⁷) étant relié à l'atome de -NR¹⁶-, l'autre (celui de R¹⁰) étant relié à un atome de silicium.

Selon un mode préféré de l'invention, le rapport de nombre de motifs fonctionnels de type (II)/nombre de motifs Si de l'huile silicone est de l'ordre de 6%.

D'autre part, le radical R¹² de la formule (II) et/ou (III) peut représenter outre un radical hydrogène, un radical R⁵ ou O-; ce qui confère de plus ainsi aux films polyuréthannes des propriétés améliorées de protection contre les rayonnements U.V.

Avantageusement, l'huile silicone peut contenir également des motifs hydroxyaryles au sein de sa structure. Ces motifs ont des propriétés antioxydantes et des propriétés de protection contre les rayonnements U.V. et le rapport du nombre de ces motifs hydroxyaryles/nombre de motifs Si de l'huile silicone étant compris entre 1 et 15%. Dans ce cas, au moins une partie des symboles R¹ et R⁵, semblables ou différents, représente un groupe fonctionnel -(CH₂)n (V) (Ar) où :
- n est compris entre 1 et 10,
- les radicaux V sont identiques et/ou différents et représentent un radical divalent choisi parmi -NH-, NHR'-, -CHN-, -O-, -CHN-, -COO-,
- R' est un radical alkyle linéaire ou ramifié ayant de 1 à 4 atomes de carbone, et
- Ar est un groupe aromatique substitué par au moins un radical OH et pouvant être substitué par au moins un radical hydrocarboné contenant de 1 à 4 atomes de carbone et pouvant comporter un hétéroatome, de préférence Ar étant un groupe phénol.

A titre d'exemples de motifs hydroxyaryles, on se référera à ceux décrits dans les brevets US 4430235 et US 4879378.

Le polyisocyanate utilisé dans le cadre de l'invention, peut être préparé selon différents modes opératoires et à partir de différents composés. Les caractéristiques du polyisocyanate utilisé peuvent varier d'une composition à une autre tout en restant dans le cadre de l'invention. Par exemple, le polyisocyanate peut être sous forme de trimère (ex : motifs isocyanates), de dimère (ex : motifs urétidione), de biuret, d'allophanate ou leur mélange.

Les polyisocyanates utilisés dans le cadre de l'invention peuvent être utilisés avec ou sans solvant. La viscosité des polyisocyanates, en extrait sec, obtenus et utilisés dans le cadre de l'invention est comprise entre 20 et 20 000 mPa.s, et de préférence entre 100 et 11 000 mPa.s. Bien entendu, la viscosité des polyisocyanates donnée ci-dessus diminuera lorsqu'ils sont mesurés avec des solvants. En outre, la teneur en NCO des polyisocyanates utilisés est comprise entre 5 et 65% en poids par rapport à l'extrait sec du polyisocyanate, et de préférence entre 15 et 25% en poids.

Les diisocyanates préférés pour la préparation des polyisocyanates des compositions selon l'invention sont ceux de formule R(NCO)₂ dans laquelle R est un groupe hydrocarboné aliphatique divalent ayant de 4 à 18 atomes de carbone, un groupe hétérocycloaliphatique dont le cycle contient de 3 à 15 atomes de carbone.

A titre d'exemples, les diisocyanates suivants sont adaptés pour la préparation des polyisocyanates utilisés dans les compositions de l'invention : le 1,4-tétraméthylène diisocyanate, 1,6-hexaméthylène diisocyanate, 2,2,4-triméthyl-1,6-hexaméthylène diisocyanate, 1,12-dodécaméthylènediisocyanate, cyclohexane-1,3-diisocyanate, cyclohexane 1,4-diisocyanate, 1-isocyanato-2-isocyanatométhylcyclopentane, 1-isocyanato-3-isocyanatométhyl 3,5,5-triméthylcyclohexane, bis(4-isocyanatocyclohexyl)méthane, 1,3-bis(isocyanatométhyl)cyclohexane, 1,4-bis(isocyanatométhyl)cyclohexane, bis(4-isocyanato-3-méthylcyclohexyl)méthane, α,α,α', α'-tétraméthyl-1,3- et/ou-1,4-xylylène diisocyanate, 1-isocyanato-1-méthyl-4(3)-isocyanatométhylcyclohexane, et 2,4- et/ou 2,6-hexahydrotoluyl diisocyanate.

De préférence, le polyisocyanate est préparé par oligocondensation ou polycondensation de polyméthylène diisocyanate ou de ses dérivés, et notamment le tétraméthylène diisocyanate et l'hexaméthylène diisocyanate.

Parmi ces polycondensats ou oligocondensats, il est possible de citer ceux préparés à partir de mélange des diisocyanates mentionnés auparavant avec des monoisocyanates ou des polyisocyanates ayant au moins 3 groupes isocyanates. Plus particulièrement, il convient de mentionner les dérivés à cycle(s) isocyanurique(s) [désignés sous le vocable de trimère], et les dérivés présentant une fonction biuret.

Les isocyanates aliphatiques ou aromatiques, et de préférence aromatiques, sont dimérisables à température ambiante, plus particulièrement en présence d'un catalyseur de dimérisation tel que la triéthylphosphine, la pyridine, la triéthylamine ou des complexes alcoxymétalliques.

Les isocyanates aliphatiques ou aromatiques sont trimérisables à haute température, en présence de catalyseur de trimérisation tel que l'acétate de calcium, le formate de sodium, l'hexaméthyldisilazane, la triéthylamine, la triphényl phosphine ou l'ammonium quaternaire. Les trimères obtenus forment des structures extrêmement stables à la chaleur et aux attaques hydrolytiques, et se caractérisent par un poids moléculaire compris entre 250 et 5 000.

A titre d'exemples de produits commerciaux, les produits commercialisés par Rhône-Poulenc et Bayer AG sont appropriés pour leur utilisation comme polyisocyanate dans les compositions de l'invention. A ce sujet, on citera les produits de la gamme Desmodur de Bayer AG, dont Desmodur N 3390 et Desmodur N 3300, les produits de la gamme Tolonate HDT de Rhône-Poulenc (Tolonate HDT LV et Tolonate HDT 90).

L'oligomère acrylique hydroxylé, utilisé dans les compositions réticulables de l'invention, présente une teneur massique en groupement hydroxyle de 0,1 à 10% (par rapport à l'extrait sec) et une viscosité de 100 à 20 000 mPa.s, de préférence de 1 000 à 6 000 mPa.s. Au moins une partie des groupements OH contenus dans l'oligomère acrylique sont réactifs vis-à-vis des groupements isocyanates lors de la formation des films polyuréthannes à partir des compositions réticulables de l'invention.

A titre d'exemples, les oligomères acryliques contenant des groupements hydroxyles pouvant être utilisés dans le cadre de l'invention sont choisis parmi : le 2-hydroxyéthylacrylate, le 2-hydroxypropylacrylate, le 2-hydroxyéthylméthacrylate et le 3-hydroxypropylméthacrylate.

En général, les oligomères acryliques sont utilisés sous forme de solution dans des solvants et ont une viscosité de 4 000 à 10 000 mPa.s. Différents types de solvants peuvent être utilisés, par exemple, les hydrocarbures, les esters et les cétones, etc. De préférence, le solvant utilisé est à base de méthylamylcétone et/ou d'acétate de butyle et comprend, en outre, d'autres solvants à points d'ébullition différents. De préférence, le solvant utilisé est la méthylamylcétone. En général, la concentration en poids d'oligomère acrylique dans la solution dudit oligomère est comprise entre 40 et 80%. Dans le cas où on utilise comme solvant la méthylamylcétone, la concentration en poids d'oligomère acrylique est comprise entre 50 et 80%. Toutefois, il est possible d'utiliser dans le cadre de l'invention des oligomères acryliques sans solvant.

A titre d'exemples de produits commerciaux, les produits commercialisés par les sociétés Rhône-Poulenc, Dupont de Nemours, Johnson, Akzo, Hoschst, Cray Valley, Croda sont appropriés pour leur utilisation comme oligomère acrylique hydroxylé dans les compositions de l'invention. On citera notamment les produits de la gamme Johnson SCX, notamment 910 et 920, les produits de la gamme Setalux (1753 SS 60, etc.), les produits de la gamme Macrynal (SM 510, etc.), les produits de la gamme Synocure et les produits de la gamme Crodaplast.

La préparation de films polyuréthannes à partir des compositions réticulables peut être effectuée selon différentes techniques notamment par durcissement chimique, durcissement thermique, rayonnement U.V. ou utilisation d'un faisceau d'électrons.

Selon une variante préférée de préparation, les films polyuréthannes sont obtenus par traitement thermique à une température comprise entre 50 et 200°C et avantageusement entre 80 et 150°C. De plus, les résultats les meilleurs sont obtenus en présence d'un catalyseur tel que le dilauréate de dibutylétain, l'octanate d'étain, le diacétate de dibutyle d'étain, favorisant ainsi les réactions entre l'huile silicone, le polyol et le polyisocyanate. Avantageusement, le catalyseur utilisé est le dilauréate de dibutylétain. D'autres catalyseurs sont également utilisables pour préparer les films polyuréthannes; à ce sujet, on se référera notamment au document EP 524 501 A1. De préférence, le catalyseur est ajouté juste avant l'addition du polyisocyanate.

A titre d'exemple, le procédé de préparation par traitement thermique d'un film polyuréthanne comprend les étapes consistant à :
(1) mélanger le solvant, l'oligomère hydroxylé et l'huile silicone,
(2) ajouter et mélanger le polyisocyanate au mélange obtenu en (1),
(4) étaler le mélange sur une surface à revêtir, et
(5) sécher le mélange étalé puis le cuire à une température comprise entre 50°C et 200°C, pendant 20 minutes à 1 heure.

A titre de variante de préparation de films polyuréthannes à partir de compositions réticulables selon l'invention, l'huile silicone est mélangée avec l'oligomère acrylique. Puis on additionne à ce mélange le polyisocyanate, le solvant et, en option, le catalyseur. Il est également possible de mettre en contact au préalable une partie du polyisocyanate avec l'huile silicone. Ces deux composés ayant réagi l'un sur l'autre, ils sont alors mélangés avec roligomère acrylique, le polyisocyanate si nécessaire, le solvant et, en option, le catalyseur.

En accord avec l'invention, les conditions opératoires de préparation de films polyuréthannes et les composés des compositions réticulables, i.e. qualités et quantités, sont choisis afin que le rapport molaire NCO/XH des films polyuréthannes soit compris entre 0,5 et 1,5 et de préférence entre 0,95 et 1,1; NCO étant la fonction isocyanate du polyisocyanate et XH représentant OH, NH et SH qui sont les fonctions réactives du polymère acrylique et ceux de l'huile silicone fonctionnalisée.

Notamment, la miscibilité contrôlée de l'huile silicone au sein du système oligomère acrylique et polyisocyanate permet à celle-ci de migrer à une vitesse relativement faible vers la surface dudit film au moment de sa formation, cette vitesse faible permettant, de plus, aux groupements de l'huile silicone portant des hydrogènes actifs de réagir avec le polyisocyanate. Ainsi, la majeure partie de l'huile silicone se retrouve dans la couche superficielle du film et est fixée par liaison chimique dans la matrice polyuréthanne, ce qui apporte des propriétés d'antirayure permanentes même après plusieurs lavages du film, confirmé par les exemples.

L'amélioration des propriétés antirayure s'observe notamment par un meilleur glissant de la surface du film qui empêche la formation de rayure. Si toutefois la rayure se produit, l'huile silicone présente dans la couche superficielle du film comble la rayure (obtention d'un état d'énergie minimale), ce qui permet l'occlusion de la rayure (effet de cicatrisation).

Le domaine d'utilisation des films polyuréthannes obtenus à partir des compositions réticulables de l'invention est très varié. Les films obtenus à partir des compositions réticulables selon l'invention peuvent être utilisés aussi bien pour un revêtement de série, un revêtement de protection ou pour un revêtement de réparation. Les revêtements peuvent être par exemple des peintures et vernis. En outre, les films peuvent contenir tous les pigments (par exemple de coloration) et additifs habituels tels que des agents de protection contre la lumière, des agents anti-oxydants, des agents nivelants, etc. En ce qui concerne les agents de protection contre la lumière, il a été précisé auparavant que les huiles silicones utilisées peuvent être avantageusement fonctionnalisées avec des groupements fonctionnels de formule (II) qui sont des capteurs de radicaux de type HALS, i.e. des agents stabilisants vis-à-vis de la lumière aux amines à encombrement stérique, et/ou des groupements fonctionnels hydroxyaryles. Dans ce cas, les films peuvent contenir d'une part des huiles silicones fonctionnalisées avec des fonctions HALS et/ou des fonctions hydroxyaryles et d'autre part, si nécessaire, des agents de protection contre la lumière, y compris ceux avec des fonctions de type HALS.

Les exemples ci-dessous illustrent la préparation d'huiles silicones particulières et adaptées aux compositions réticulables en accord avec l'invention, et la formulation desdites compositions réticulables. En outre, les qualités des films polyuréthannes obtenues à partir des compositions réticulables sont illustrées par les tests ci-dessous.

### EXEMPLES

### 1. Préparation des huiles fonctionnalisées

Les nouvelles huiles silicones des compositions réticulables en accord avec la présente invention ont été préparées par double ou triple hydrosilylation d'une huile silicone contenant des motifs SiH.

### Exemple 1 : préparation du Composé A

Dans un réacteur de 250 ml, équipé d'un système d'agitation, d'une sonde de température, d'un réfrigérant et dont le volume intérieur a été préalablement séché thermiquement sous courant d'azote, on introduit par l'intermédiaire d'une seringue, 30 g de toluène (séché sur tamis moléculaire activé). Le solvant est agité et la température du milieu est portée à 90°C. A cette température, 60 mg de 4-méthoxyphénol et 23 µl d'une solution dans le divinyltétraméthyldisiloxane d'un catalyseur au platine (catalyseur dit de Karstedt) contenant 11 % en poids de platine métal sont introduits.

On coule alors simultanément, de manière progressive, par l'intermédiaire de deux seringues, sur une période de 1 h30 :
- 15,77 g de styrène (soit 151,64 mmoles) d'une part
- et d'autre part 50,00 g (soit 240,7 meq de fonctions SiH) d'une huile polyméthylhydrogénosiloxane dont les caractéristiques sont Mn = 1331 g.mol⁻¹ et 4814 meq de fonctions SiH pour 1 Kg d'huile.

En fin de coulée, le taux de transformation des fonctions SiH est de 62% en mote. Sont alors introduits, par l'intermédiaire d'une seringue et sur une période de 2h, 15 g d'alcool allylique (258 mmoles).

La masse réactionnelle est agitée à cette température pendant 15h. Le taux de transformation des fonctions SiH est alors de 100% en mole.

On élimine ensuite le solvant et les monomères résiduels par dévolatilisation qui s'opère à 120°C sous un vide de 4.10² Pa pendant 1 h.

On récupère 59 g d'une huile légèrement colorée dont les caractéristiques définies par R.M.N. sont les suivantes :

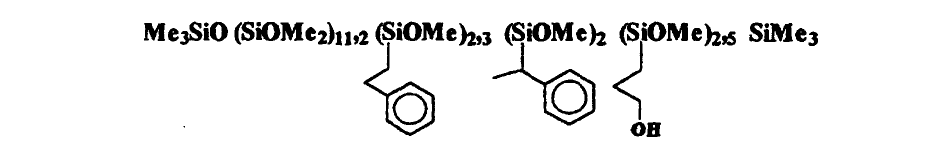

### Exemple 2 : préparation du Composé B

Dans un réacteur de 500 ml, préalablement séché thermiquement sous courant d'azote, muni d'un système d'agitation mécanique, d'une sonde de température, d'un réfrigérant, on introduit par l'intermédiaire d'une seringue 54,75 g de toluène (conservé sur tamis moléculaire). Le solvant est agité et la température du milieu est portée à 90°C. A cette température, 93 mg de 4-méthoxyphénol et 41 µl d'une solution dans le divinyltétraméthyldisiloxane d'un catalyseur au platine (catalyseur dit de Karstedt) contenant 11% en poids de platine métal sont introduits. On coule alors de manière progressive, par l'intermédiaire d'une pompe péristaltique sur une durée de 1h30, un mélange constitué de :
- 47,42 g de styrène (soit 456 mmoles),
- et 90 g (soit 617,7 meq de fonctions SiH) d'une huile polyméthylhydrogénosiloxane dont les caractéristiques sont Mn = 1267 g.mole⁻¹ et 6864 meq de fonctions SiH pour 1 kg d'huile.

En fin de coulée, le taux de transformation des fonctions SiH est de 70% en mole.

Puis 30 µl du même catalyseur dit de Karstedt sont introduits dans la masse réactionnelle. Les conditions opératoires d'agitation et de chauffage sont maintenues 18h. Le taux de transformation des fonctions SiH est alors de 73% en mole.

Sont alors introduits, par l'intermédiaire d'une ampoule de coulée et sur une durée de 3h, 36,04 g d'allyloxyéthanol (soit 352,9 mmoles) et 10 µl du même catalyseur dit de Karstedt.

En fin de coulée, le taux de transformation des fonctions SiH est alors de 91% en mole. La masse réactionnelle est. agitée à cette température pendant 17h. Le taux de transformation des fonctions SiH est alors de 100% en mole.

Le solvant et les monomères résiduels sont éliminés par dévolatilisation qui s'opère à 130°C sous 6,5.10² Pa pendant 2h30. On récupère 150 g d'une huile légèrement colorée dont les caractéristiques définies par résonance magnétique nucléaire sont les suivantes :

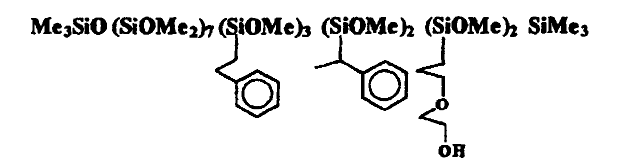

### Exemple 3 : préparation du composé C

Dans un réacteur de 500 ml, préalablement séché thermiquement sous azote, muni d'un système d'agitation mécanique, d'une sonde de température, d'un réfrigérant, on introduit par l'intermédiaire d'une seringue 56,61 g de toluène (conservé sur tamis moléculaire). Le solvant est agité et la température du milieu est portée à 90°C. A cette température, 140 mg de 4-méthoxyphénol et 80 pl d'une solution dans le divinyltétraméthyldisiloxane d'un catalyseur au platine (catalyseur dit de Karstedt) contenant 11% en poids de platine métal sont introduits. On coule alors, de manière progressive, par l'intermédiaire d'une pompe péristaltique, sur une durée de 1h30, un mélange constitué de :
- 76,44 g de styrène (soit 735 mmoles) d'une part, et
- 150 g (soit 1029 meq de fonctions SiH) d'une huile polyrnéthylhydrogénosiloxane d'autre part, dont les caractéristiques sont Mn = 1267 g.mole⁻¹ et 6864 meq de fonctions SiH pour 1 kg d'huile.

En fin de coulée, le taux de transformation des fonctions SiH est de 66% en mole. 50 µl du même catalyseur dit de Karstedt sont introduits dans la masse réactionnelle. Les conditions opératoires d'agitation et de chauffage sont maintenues 17h. Le taux de transformation des fonctions SiH est alors de 71,5% en mole. Le solvant et les monomères résiduels sont éliminés par dévolatilisation qui s'opère à 110°C sous un vide de 6,5 .10² Pa pendant 2h. On récupère 221 g d'une huile légèrement colorée dont la formule générale est (1220 meq de fonctions SiH pour 1 kg d'huile) :

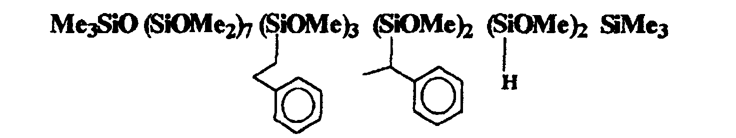

### Exemple 4 : préparation du composé D

Dans un réacteur de 250 ml, séché thermiquement sous azote, muni d'un système d'agitation mécanique, d'une sonde de température, d'un réfrigérant et d'une ampoule de coulée isobare, on introduit par l'intermédiaire d'une seringue 25,10 g de toluène (conservé sur tamis moléculaire) d'une part, et 17,82 g d'allyloxy-tetraméthylpipéridine (soit 90,4 mmoles). Le mélange est agité et la température du milieu est portée à 90°C. A cette température, 40 µl d'une solution dans le divinyltétraméthyldisiloxane d'un catalyseur au platine (catalyseur dit de Karstedt) contenant 11% en poids de platine métal sont introduits. On coule alors, de manière progressive, par l'intermédiaire de l'ampoule de coulée, sur une durée de 1h30, 70 g de composé C préparé à l'exemple 3.

En fin de coulée, le taux de transformation des fonctions SiH est de 83%. 30 µl du même catalyseur dit de Karstedt sont introduits dans la masse réactionnelle. Ces conditions opératoires d'agitation et de chauffage sont maintenues 19h. Le taux de transformation des fonctions SiH est alors de 100% en mole.

Le solvant et les monomères résiduels sont éliminés par dévolatilisation à 130°C sous 1,4 .10² Pa pendant 1h30. On récupère 80 g d'une huile légèrement colorée dont les caractéristiques sont les suivantes :
- 981 meq de fonctions SiH pour 1 kg d'huile,
- structure moyenne (déterminée par R.M.N.) :

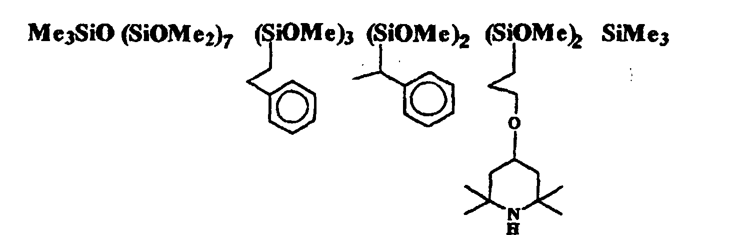

### Exemple 5 : préparation du Composé E

Dans un réacteur de 250 ml, préalablement séché thermiquement sous azote, muni d'un système d'agitation mécanique, d'une sonde de température, d'un réfrigérant et d'une ampoule de coulée isobare, on introduit successivement par l'intermédiaire d'une seringue 22,57 g de toluène (conservé sur tamis moléculaire) d'une part, et 20,30 g de 1-octa-2,7-diène oxytriméthylsilane (soit 103 mmoles). Le mélange est agité et la température du milieu est portée à 90°C. A cette température, 35 µl d'une solution dans le divinyltétraméthyldisiloxane d'un catalyseur au platine (catalyseur dit de Karstedt) contenant 11% en poids de platine métal sont introduits. On coule alors, de manière progressive, par l'intermédiaire d'une ampoule de coulée, sur une durée de 1h30, 70 g d'huile polyméthylhydrogénostyrénylsiloxane C obtenue à l'exemple 3.

En fin de coulée, le taux de transformation des fonctions SiH est de 93%. 20 µl du même catalyseur dit de Karstedt sont introduits dans la masse réactionnelle. Ces conditions opératoires d'agitation et de chauffage sont maintenues 18h. Le taux de transformation des fonctions SiH est alors de 100% en mole.

Le solvant et les monomères résiduels sont éliminés par dévolatilisation qui s'opère à 130°C sous 1,33.10² Pa pendant 3h. On récupère 85 g d'une huile légèrement colorée dont la structure moyenne (déterminée par R.M.N.) est la suivante :

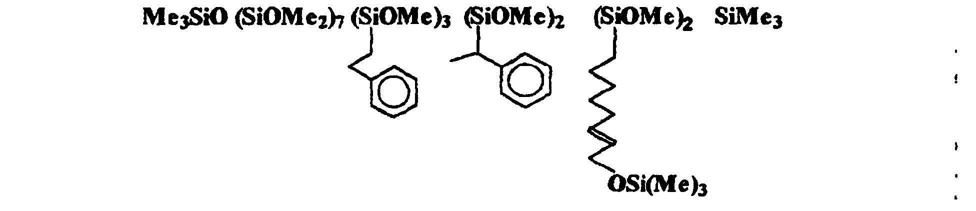

### Exemple 6 : préparation du composé F

Dans un réacteur d'1 I, muni d'un système d'agitation mécanique, sont introduits 67 g de l'huile bifonctionnalisée E obtenue à rexemple 5, soit 78 mmoles de motifs OSi(Me)₃. Cette huile est dispersée dans 715 ml d'un mélange constitué d'acide acétique, de tétrahydrofurane et d'eau, dont les proportions volumiques sont respectivement 4, 2 et 1. Une agitation vigoureuse est maintenue 24h à température ambiante.

En fin de réaction, les solvants sont éliminés par plusieurs entraînements au toluène qui s'opèrent à 80°C sous un vide de 2,5 .10² Pa pendant 30mn. On récupère 61 g d'une huile légèrement colorée dont la structure moyenne est la suivante (R.M.N.) :

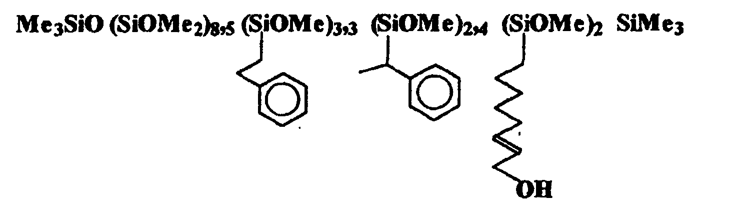

### Exemple 7 : préparation du composé G

Dans un réacteur de 500 ml, préalablement séché thermiquement sous azote, muni d'un système d'agitation mécanique, d'une sonde de température, et d'un réfrigérant, on introduit par l'intermédiaire d'une seringue 54,15 g de toluène (conservé sur tamis moléculaire). Le solvant est agité et la température du milieu est portée à 90°C. A cette température, 410 mg de 4-méthoxyphénol et 110 µl d'une solution dans le divinyltétraméthyldisiloxane d'un catalyseur au platine (catalyseur dit de Karstedt) contenant 11% en poids de platine métal sont introduits. On coule alors, de manière progressive, par l'intermédiaire d'une pompe péristaltique, sur une durée de 1h30, un mélange constitué de 54,15 g de styrène (soit 520,8 mmoles) et de 128 g (soit 911,4 meq de fonctions SiH) d'une huile polyméthylhydrogéno-siloxane dont les caractéristiques sont les suivantes Mn = 1267 g.mole⁻¹ et 7120 meq de fonctions SiH pour 1 kg d'huile.

En fin de coulée, le taux de transformation des fonctions SiH est de 51,5% en mole.

Les conditions opératoires d'agitation et de chauffage sont maintenues 9h. Le taux de transformation des fonctions SiH est alors de 56% en mole. Sont alors introduits, par l'intermédiaire d'une pousse-seringue et sur une période de 3h, 36,04 g d'allyloxypentaméthylpipéridine (soit 130,2 mmoles). En fin de coulée, le taux de transformation des fonctions SiH est de 70,1% en mole. Dans le milieu réactionnel, sont introduits 20 µl du même catalyseur dit de Karstedt. Les conditions opératoires d'agitation et de chauffage sont maintenues 12h. Le taux de transformation des fonctions SiH est alors de 71% en mole. On coule alors, de manière progressive, par l'intermédiaire d'une pousse-seringue, sur une durée de 3h, 45,27 g d'alcool allylique (soit 780,5 mmoles) et 20 µl du même catalyseur dit de Karstedt

En fin de coulée, le taux de transformation de fonctions SiH est alors de 97%. Les conditions opératoires d'agitation et de chauffage sont maintenues 20h. Le taux de transformation des fonctions SiH est alors de 100%.

Le solvant et les monomères résiduels sont éliminés par dévolatilisation qui s'opère à 130°C sous 6,5 .10² Pa pendant 3h30. On récupère 215 g d'une huile légèrement colorée dont les caractéristiques sont les suivantes :
- 543 meq de fonctions SiH pour 1 kg d'huile,
- structure moyenne (déterminée par R.M.N.) :

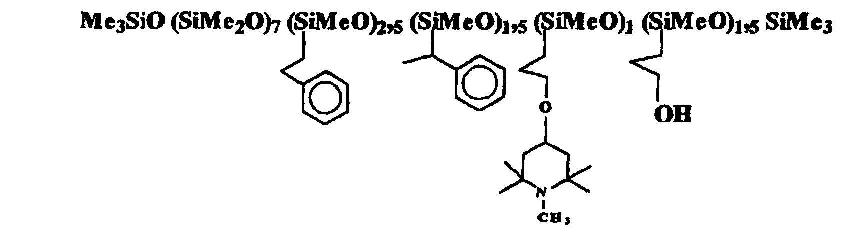

### Exemple 8 : préparation du composé H

Dans un réacteur de 500 ml, séché thermiquement sous azote, muni d'un système d'agitation mécanique, d'une sonde de température, et d'un réfrigérant, on introduit par l'intermédiaire d'une seringue 66,0 g de toluène (conservé sur tamis moléculaire). Le solvant est agité et la température du milieu est portée à 90°C. A cette température, 410 mg de 4-méthoxyphénol et 90 µl d'une solution dans le divinyltétraméthyldisiloxane d'un catalyseur au platine (catalyseur dit de Karstedt) contenant 11% en poids de platine métal sont introduis. On coule alors, de manière progressive, par l'intermédiaire d'une pompe péristaltique, sur une coulée de 1h30, un mélange constitué de 62,45 g de styrène (soit 600,5 mmoles) et de 200 g (soit 1401,2 meq de fonctions SiH), d'une huile polyméthylhydrogénosiloxane dont les caractéristiques sont Mn = 1267 g.mole⁻¹ et 7006 meq de fonctions SiH pour 1 kg d'huile.

En fin de coulée, le taux de transformation des fonctions SiH est de 31.5% en mole. Les conditions opératoires d'agitation et de chauffage sont maintenues 10h. Le taux de transformation des fonctions SiH est alors de 42,5% en mole. Sont alors introduits, par l'intermédiaire d'une pousse-seringue et sur une période de 3h, 59,35 g de vinyltriméthoxysilane (soit 400,4 mmoles). Les conditions opératoires d'agitation et de chauffage sont maintenues 11h. Le taux de transformation des fonctions SiH est alors de 72% en mole. On coule alors, de manière progressive, par l'intermédiaire d'une pousse-seringue, sur une durée de 3h, 34,83 g d'alcool allylique (soit 600,5 mmoles) et 30 µl du même catalyseur dit de Karstedt.

En fin de coulée, le taux de transformation de fonctions SiH est alors de 91,5%. Les conditions opératoires d'agitation et de chauffage sont maintenues 20h. Le taux de transformation des fonctions SiH est alors de 100%.

Le solvant et les monomères résiduels sont éliminés par dévolatilisation qui s'opère à 130°C sous un vide de 6,5.10² Pa pendant 3h30. On récupère 341,5 g d'une huile légèrement colorée dont la structure moyenne (déterminée par R.M.N.) est la suivante :

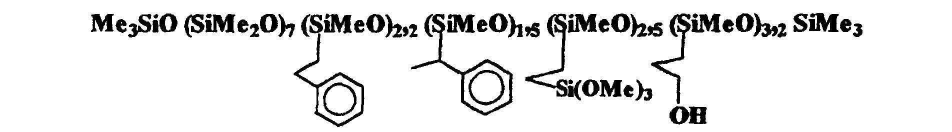

### 2. Préparations de films polyuréthannes à partir des compositions réticulables selon l'invention

A. Les compositions réticulables testées contiennent le composé A et sont préparées par mélange des composants identifiés. La quantité des composants est indiquée dans le Tableau 1; toutes les indications relatives aux parts et aux pourcentages sont des indications pondérales, les pourcentages étant entre parenthèses.

**Tableau 1**

| **COMPOSITIONS** | **Co1** **(Témoin)** | **Co2** | **Co3** | **Co4** |
|---|---|---|---|---|
| Polyisocyanate¹⁾ | 19,3 | 3,26 | 19,3 | |
| SCX 920²⁾ | 50,9 | 8,05 | 50,9 | 50,9 |
| Dilauréate de dibutylétain | | 0,01 | | |
| Composé A (% composé A/extrait sec) | | 0,29 (1,5) | 0,6 (1,0) | |
| Acétate de butyle | 29,8 | 8,39 | 29,2 | 29,2 |
| Polyisocyanate¹⁾ contenant% du composé A³⁾ | | | | 19,9 |
| NCO/OH (molaire) | 1,05 | 1,1 | 1,05 | 1,05 |
| Extrait sec (%) | 60 | 50 | 60 | 60 |

| | | | | |
|---|---|---|---|---|
| (1) Polyisocyanate aliphatique de type trimère liquide à basse viscosité sans solvant à 23% de fonctions NCO et à 100% d'extrait sec (tolonate HDT-LV commercialisé par Rhône-Poulenc). | | | | |
| (2) Oligomère acrylique contenant des groupes hydroxyles à indice OH de 140 et à raison de 80% dans la méthyl n-amyl cétone (produit commercialisé par Johnson Polymer). | | | | |
| (3) Le composé A préréagit avec le polyisocyanate pendant 16h à 40°C. | | | | |

Les compositions Co1 à Co4 ainsi obtenues sont appliquées sur plaque de verre (350 x 105 x 2 mm) en utilisant un banc Ericksen à vitesse régulée donnant un film humide d'épaisseur de 100 µm. La réticulation des films se fait par traitement thermique en étuve ou évolution à température ambiante en salle conditionnée pendant plusieurs jours.
B. Les compositions réticulables selon l'invention, contenant les composés B, D, F, G et H, sont préparées par mélange des composants identifiés et dont la quantité est indiquée dans le Tableau 2. Toutes les indications relatives aux parts et aux pourcentages sont des indications pondérales, les pourcentages étant entre parenthèses.

**Tableau 2**

| **COMPOSITIONS** | **Co5** **(Témoin)** | **Co6** | **Co7** | **Co8** | **Co9** | **Co10** |
|---|---|---|---|---|---|---|
| Polyisocyanate ¹⁾ | 16,67 | 16,67 | 16,67 | 16,67 | 16,67 | 16,67 |
| SCX 920 ²⁾ | 43,25 | 42,37 | 42,42 | 42,37 | 42,34 | 42,34 |
| Dilauréate de dibutyle étain | 0,01 | 0,01 | 0,01 | 0,01 | 0,01 | 0,01 |
| Composé (% composé/extrait sec) | / | B 1,56 (3,08) | D 1,56 (3,08) | F 1,56 (3,08) | G 1,56 (3,07) | H 1,56 (3,08) |
| Acétate de butyle | 25,53 | 26,24 | 26,26 | 26,24 | 26,24 | 26,24 |
| NCO/OH (molaire) | 1,05 | 1,05 | 1,05 | 1,05 | 1,05 | 1,05 |
| Extrait sec (%) | 60 | 60 | 60 | 60 | 60 | 60 |

| | | | | | | |
|---|---|---|---|---|---|---|
| (1) Polyisocyanate aliphatique de type trimère liquide à basse viscosité sans solvant à 23% de fonctions NCO et à 100% d'extrait sec ( tolonate HDT-LV commercialisé par Rhône-Poulenc). | | | | | | |
| (2) Oligomère acrylique contenant des groupes hydroxyles à indice OH de 140 et à raison de 80% dans la méthyl n-amyl cétone (produit commercialisé par Johnson Polymer). | | | | | | |

### 3. Tests d'applications des compositions selon l'invention

Les tests d'évaluation des propriétés des films ou revêtements décrits ci-dessous permettent de mettre en évidence les propriétés améliorées et notamment une meilleure résistance à la formation de rayure des revêtements Re1 à Re19 obtenus à partir des compositions réticulables Co1 à Co10.

### A. Aspect des plaques après cuisson

On observe que la qualité du revêtement, jugée par l'aspect extérieur des plaques, est d'aspect parfait. Les tableaux 3 et 4 décrivent les conditions de cuisson ainsi que l'aspect des plaques contenant les huiles silicones A, B, D, F, G ou H.

**Tableau 3**

| **Revêtement** | **Re1*** | **Re2** | **Re3** | **Re4** | **Re5*** | **Re6** | **Re7** | **Re8** | **Re9** | **Re10** |
|---|---|---|---|---|---|---|---|---|---|---|
| Composition | Co1 | Co2 | Co3 | Co4 | Co1 | Co3 | Co4 | Co1 | Co3 | Co4 |
| Aspect | ◊ | ◊ | ◊ | ◊ | ◊ | ◊ | ◊ | ◊ | ◊ | ◊ |
| Cuisson | 80°C 30 min | 150°C 10 min | 80°C 30 min | 80°C 30 min | 23°C 7 jours | 23°C 7 jours | 23°C 7 jours | 23°C 15 jours | 23°C 15 jours | 23°C 15 jours |
| ◊ *film transparent, d'aspect parfait* | | | | | | | | | | |
| *Re1* Re5* : revêtement témoin* | | | | | | | | | | |

**Tableau 4**

| **Revêtement** | **Re11*** | **Re12** | **Re13** | **Re14** | **Re15** | **Re16** | **Re17** | **Re18** | **Re19** |
|---|---|---|---|---|---|---|---|---|---|
| Composition | Co5 | Co6 | Co7 | Co8 | Co8 | Co8 | Co8 | Co9 | Co10 |
| Aspect | ◊ | ◊ | ◊ | ◊ | ◊ | ◊ | ◊ | ◊ | ◊ |
| Cuisson | 80°C 30 min | 80°C 30 min | 80°C 30 min | 80°C 30 min | 110°C 30 min | 130°C 30 min | 150°C 30 min | 80°C 30 min | 80°C 30 min |
| ◊ *film transparent, d'aspect parfait.* | | | | | | | | | |
| *Re11* : revêtement témoin.* | | | | | | | | | |

### B. Résistance à la rayure

i) Les revêtements transparents Re1, Re3 à Re10 ont été soumis aux tests de résistance à la rayure.
Les plaques de verre sont fixées puis soumises aux rayures sous la pression d'un poids de 500 g à raison de 5 passages à vitesse régulière et modérée dans un sens et 5 passages dans l'autre sens de :
◆ un tampon sec de dimension (150 x 38,4 mm) de marque Scotch-Brite® ultra fin de chez Dupont.
◆ un tampon humide de dimension (150 x 38,4 mm) de type Scotch-Brite® ultra fin de chez Dupont.
◆ un papier calque (référence NFE 04502 de chez Photogay, Lyon, France).

Le tampon de marque Scotch-Brite ou le papier calque sont renouvelés pour chaque type de revêtement.
L'évaluation de la présence plus ou moins importante de rayures se fait par la mesure de perte du brillant du revêtement. Ces mesures sont réalisées à l'aide d'un brillancemètre d'Ericksen à rayon incident de 20°C. Pour chaque plaque, il est effectué 5 mesures à des endroits définis.
Les mesures sont effectuées sur :
- des plaques n'ayant pas subi le test de rayure,
- des plaques ayant subi le test de rayure, 1h plus tard (voir Tableau 5).
- des plaques ayant subi le test de rayure, 1 mois plus tard (voir Tableau 6).

Les résultats sont exprimés en pourcentage de perte de brillance du revêtement avant et après la réalisation du test de rayure.

**Tableau 5**

| **Revêtement** | **Re2** | **Re3** | **Ra4** | **Re5** | **Re6** | **Re7** | **Re8** | **Re9** | **Re10** |
|---|---|---|---|---|---|---|---|---|---|
| Scotch-Brite sec | 26 | 5 | 5 | 21 | 20 | 17 | 24 | 21 | 20 |
| Scotch-Brite humide | 7 | 5 | 4 | 16 | 15 | 16 | 19 | 16 | 17 |
| Papier calque | 4 | 2 | 2 | 14 | 7 | 4 | 12 | 4 | 7 |

**Tableau 6**

| **Revêtement** | **Re2** | **Re3** | **Re4** | **Re5** | **Re6** | **Re7** | **Re8** | **Re9** | **Re10** |
|---|---|---|---|---|---|---|---|---|---|
| Scotch-Brite sec | 29 | 7 | 6 | 7 | 7 | 6 | 3 | 3 | 5 |
| Scotch-Brite humide | 8 | 5 | 2 | 4 | 4 | 3 | 3 | 1 | 1 |
| Papier calque | 6 | 5 | 1 | 5 | 3 | 4 | 1 | 0 | 1 |

ii) D'autres tests de rayure ont été effectués sur les revêtements Re 11 à Re 19. Les plaques de verre sont fixées puis soumises aux rayures sous la pression d'un poids de 600 g à raison de 15 allers et retours à vitesse régulière et modérée.

### Matériel utilisé :

- un tissu en coton de dimension 150 x 150 mm VERATEC® (Graphic Arts Cheesecloth),
- une poudre abrasive BON-AM^{I}® (Bon Ami Co, Kansas City, MO 64101),
- un abrasimètre.

Le frottement entre le poids et la poudre abrasive entraîne la formation de rayures. Le tissu en coton et la poudre abrasive sont renouvelés pour chaque type de revêtement. L'évaluation de présence plus ou moins importante de rayure se fait par mesure de la perte de brillance du revêtement. Ces mesures sont réalisées à l'aide d'un brillancemètre d'Ericksen à rayon incident de 20°.

Pour chaque plaque, 3 mesures à des endroits bien définis sont effectuées.

Les mesures sont réalisées sur des plaques :
- n'ayant pas subi le test de rayure
- ayant subi le test de rayure 1h plus tard
- ayant subi le test de rayure 7 jours plus tard.

Les résultats (tableau 7) sont exprimés en pourcentage de perte de brillance du revêtement avant et après la réalisation du test de rayure.

**Tableau 7**

| | **Re11** | **Re12** | **Re13** | **Re14** | **Re15** | **Re16** | **Re17** | **Re18** | **Re19** |
|---|---|---|---|---|---|---|---|---|---|
| Perte de billance (%) (1h après rayure) | 35,2 | 28,7 | 18,4 | 27,9 | 29,4 | 28,3 | 22,6 | 25,7 | 28,6 |
| Perte de billance (%) (7j après rayure) | 20,3 | 14,9 | 3,3 | 14,3 | 15,3 | 16,1 | 14,3 | 10,6 | 14,9 |

### C. Mesures de l'énergie de surface

La mesure de l'énergie de surface a été réalisée dans les conditions suivantes : sur chaque plaque revêtue de films polyuréthannes obtenus à partir de compositions réticulables selon l'invention et d'autres compositions ne contenant pas de silicone on dispose une goutte d'eau bidistillée et une goutte de diiodométhane; lors du dépôt de la goutte, on mesure l'angle de contact entre celle-ci et la surface de la plaque; en tenant compte des valeurs des tensions superficielles de l'eau et du diiodométhane, on calcule l'énergie de surface (γS) et ces composantes polaire γP et dispersive γD.

**Tableau 8**

| **Revêtement** | **Re1** | **Re3** | **Re4** | **Re11** | **Re12** | **Re14** | **Re18** | **Re19** |
|---|---|---|---|---|---|---|---|---|
| γP | 2,2 | 2,0 | 1,9 | 1,8 | 2,4 | 3,4 | 3,8 | 3,4 |
| γD | 33,3 | 23,4 | 24,3 | 36,4 | 24,1 | 23,2 | 22,1 | 22,2 |
| γL | 35,5 | 25,4 | 26,0 | 38,2 | 26,5 | 26,9 | 25,8 | 25,6 |

Les résultats du tableau 8 montrent que les revêtements constitués de films polyuréthannes selon l'invention ont une énergie de surface moins élevée que celle des revêtements issus de compositions sans silicone (Re1 et Re11); ceci traduit notamment que les revêtements constitués de films polyuréthannes contiennent en surface de l'huile silicone.

De plus, des mesures d'énergie de surface ont également été effectuées sur des revêtements après que ceux-ci aient subi une opération de lavage. Dans ce cas, le lavage consiste à essuyer trois fois le revêtement avec du papier ouatine imbibé d'isopropanol, à raison de 4 allers-retours et changement de papier par essuyage.

Les résultats du Tableau 9 montrent que l'énergie de surface est toujours moins élevée pour les revêtements selon l'invention par rapport à celle des revêtements sans silicone, ce qui traduit donc la présence durable et constante de l'huile silicone au sein de la matrice polyuréthanne après lavage (pas d'élimination de l'huile silicone à la surface dudit film).

**Tableau 9**

| Revêtement | Re1(témoin) | Re3 | Re4 | Re12 | Re13 | Re14 | Re18 | Re19 |
|---|---|---|---|---|---|---|---|---|
| γP | 2,2 | 2,0 | 1,9 | 3,6 | 2,6 | 3,8 | 2,6 | 4,3 |
| γD | 33.3 | 23,4 | 24,3 | 22,8 | 27,5 | 24,7 | 22,6 | 21,5 |
| γL | 35.5 | 25,4 | 26,0 | 26,5 | 30,1 | 28,6 | 25,2 | 25,8 |

## Revendications

1. Composition réticulable comprenant les composés suivants :
(a) 20 à 50% en poids de polyisocyanate,
(b) 50 à 80% en poids d'oligomère acrylique contenant des groupements hydroxyles dont la teneur en poids par rapport à l'oligomère acrylique est comprise entre 2,5 et 4,5%,
(c) 1 à 10% en poids d'une huile silicone de formule (I) : 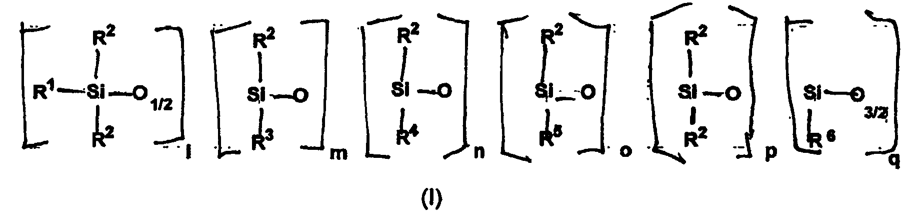
dans laquelle :
(1) o et p sont des nombres entiers identiques ou différents compris entre 1 à 100, et de préférence de 1 à 50,
(2) l représente un nombre entier tel que l =2 + q,
(3) q représente un nombre entier compris entre 0 et 10,
(4) m représente un nombre entier compris entre 1 et 60, de préférence entre 1 et 30, particulièrement de préférence de 1 à 10,
(5) n est un nombre entier tel que 20 < (100 x m)/(m + n) < 60, de préférence 25 < (100 x m)/(m + n) < 55,
(6) les symboles R¹ et R² sont identiques et/ou différents et représentent un radical hydrocarboné choisi parmi les radicaux alkyles linéaires ou ramifiés ayant de 1 à 4 atomes de carbone, les radicaux alkoxy linéaires ou ramifiés ayant de 1 à 4 atomes de carbone, les radicaux aryles, les radicaux alkylaryles, et de préférence, un radical méthyle, un radical phényle, un radical méthoxy ou un radical éthoxy,
(7) les symboles R³ et R⁴ sont identiques et/ou différents et sont choisis parmi :
- les radicaux monovalents -(CH₂)ₕ-Si-(R¹)₃ où h est compris entre 1 et 10, de préférence de 1 à 3,
- les radicaux monovalents alkylaryles aromatiques, la partie alkyle linéaire ou ramifiée contenant 1 à 4 atomes de carbone, de préférence le symbole R³ représentant le radical monovalent -CH(CH₃)C₆H₅ et le symbole R⁴ représentant le radical monovalent -CH₂CH₂C₆H₅, le taux de motifs Si modifiés de l'huile silicone par ces groupements variant de 20 à 40%,
(8) les symboles R⁵ et R⁶ sont identiques et/ou différents et représentent un groupe fonctionnel monovalent choisi parmi :
- une amine primaire monovalente de type -R⁷-NH₂ où R⁷ et un radical alkyle linéaire, ramifié ou cyclique, ayant de 1 à 6 atomes de carbone,
- une amine secondaire monovalente de type -R⁸-NH-R⁹ où R⁸ et R⁹, identiques et/ou différents sont des chaînes alkyles linéaires, ramifiées ou cycliques, ayant de 1 à 6 atomes de carbone,
- un radical monovalent -(CH₂)ₐ(NHCH₂CH₂)_{b}NH₂ où c et d sont des nombres entiers indépendants :
· a est compris entre 1 et 10, de préférence 1 à 3,
· b est compris entre 0 et 10, de préférence 0 à 1,
- un radical monovalent -(CH₂)_{c}(OCH₂CH₂)_{d}(OCH₂CHCH₃)ₑOH où c, d et e sont des nombres entiers indépendants :
· c est compris entre 1 et 20, de préférence 1 à 10,
· d est compris entre 0 et 70, de préférence 0 à 12,
· e est compris entre 0 et 70, de préférence 0 à 15,
- un radical monovalent -(CH₂)_{f}SH où f est un nombre entier pouvant aller de 1 à 10, de préférence de 1 à 3,
- un radical monovalent -(CH₂)_{g}-C(R')₂-OH où g est un nombre entier pouvant aller de 1 à 10 et de préférence de 1 à 3, et R' représente un radical hydrocarboné choisi parmi un radical alkyle linéaire ou ramifié ayant de 1 à 4 atomes de carbone, les radicaux aryles et les radicaux alkylaryles.

2. Composition réticulable selon la revendication 1, **caractérisée en ce que** l'huile silicone est faiblement miscible au couple constitué du mélange d'oligomère acrylique et de polyisocyanate.

3. Composition réticulable selon l'une quelconque des revendications 1 ou 2 comprenant :
- (a) 20 à 40% en poids de polyisocyanate, de préférence 30%,
- (b) 60 à 80% en poids d'oligomère acrylique hydroxylé, de préférence 70%, et
- (c) 1 à 4% en poids d'une huile silicone de formule (I), de préférence 2 à 3%.

4. Composition réticulable selon la revendication 3, **caractérisée en ce que** l'oligomère acrylique contient entre 0,1 et 10% en poids de groupements hydroxyles et de préférence de 1 à 6% en poids, et plus particulièrement entre 2,5 et 4,5%.

5. Composition réticulable selon l'une quelconque des revendications 1 à 4, **caractérisée en ce que** la composition réticulable comprend un solvant tel que le pourcentage en poids des composés (a), (b) et (c) par rapport à la composition réticulable contenant un solvant soit compris entre 40 et 80%, et de préférence de l'ordre de 50 à 60%.

6. Composition réticulable selon l'une des revendications 1 à 5, **caractérisée en ce que** une fraction des symboles R⁶et R⁵, identiques et/ou différents, représentent un reste de formule (II) : 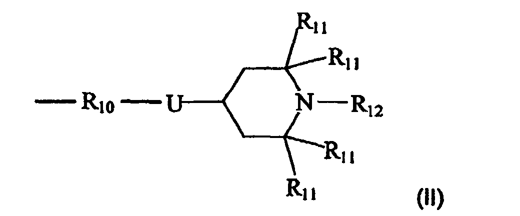 dans laquelle :
(1) les radicaux monovalents R¹¹ sont identiques et/ou différents, choisis parmi les radicaux alkyles linéaires ou ramifiés ayant 1 à 3 atomes de carbone et le radical phényle;
(2) le radical monovalent R¹² représente un radical hydrogène;
(3) le radical R¹⁰ est un radical hydrocarboné divalent choisi parmi :
◆ les radicaux alkylènes linéaires ou ramifiés, ayant 2 à 18 atomes de carbone;
◆ les radicaux alkylènes-carbonyles dont la partie alkylène linéaire ou ramifiée, comporte 2 à 20 atomes de carbone;
◆ les radicaux alkylènes-cyclohexylènes dont la partie alkylène linéaire ou ramifiée, comporte 2 à 12 atomes de carbone et la partie cyclohexylène comporte un groupement OH et éventuellement 1 ou 2 radicaux alkyles ayant 1 à 4 atomes de carbone;
◆ les radicaux de formule -R¹³-O-R¹³ dans laquelle les radicaux R¹³ identiques ou différents représentent des radicaux alkylènes ayant 1 à 12 atomes de carbone;
◆ les radicaux de formule -R¹³-O-R¹³ dans laquelle les radicaux R¹³ ont les significations indiquées précédemment et l'un d'entre eux ou les deux sont substitués par un ou deux groupement(s) -OH;
◆ les radicaux de formule -R¹³-COO - R¹³ dans laquelle les radicaux R¹³ ont les significations indiquées précédemment;
◆ les radicaux de formule -R¹⁴-O-R¹⁵-O-CO-R¹⁴ dans laquelle les radicaux R¹⁴ et R¹⁵ identiques et/ou différents, représentent des radicaux alkylènes ayant 2 à 12 atomes de carbone et le radical R¹⁰ est éventuellement substitué par un radical hydroxyle;
◆ U représente -O- ou -NR¹⁶-, R¹⁶ étant un radical choisi parmi un atome d'hydrogène, un radical alkyle linéaire ou ramifié comportant 1 à 6 atomes de carbone et un radical divalent de formule (III) : 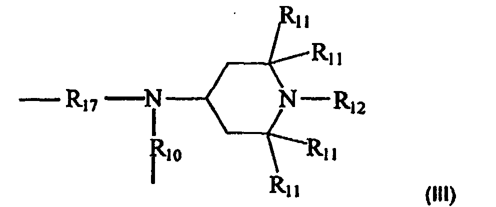 dans laquelle R¹⁰ a la signification indiquée précédemment, R¹¹ et R¹² ont les significations indiquées précédemment et R¹⁷ représente un radical divalent alkylène, linéaire ou ramifié, ayant de 1 à 12 atomes de carbone, l'un des liens valentiels (celui de R¹⁷) étant relié à l'atome de -NR¹⁶-, l'autre (celui de R¹⁰) étant relié à un atome de silicium.

7. Composition réticulable selon la revendication 6, **caractérisée en ce que** le rapport nombre de groupes fonctionnels de formule (II)/nombre de motifs Si de l'huile silicone est compris entre 5 et 15%, et de préférence de l'ordre de 6%.

8. Composition réticulable selon rune quelconque des revendications 6 ou 7, **caractérisée en ce que** le radical monovalent R¹² de la formule (II) et/ou (III) représente un radical hydrogène; le radical R⁵, ou O.

9. Composition réticulable selon l'une quelconque des revendications 1 à 8, **caractérisée en ce qu'**une fraction des symboles R¹ et R⁵, identiques et/ou différents, représentent des motifs hydroxyaryles -(CH₂)n- (V) (Ar) où :
- n est compris entre 1 et 10,
- les radicaux V sont identiques et/ou différents et représentent un radical divalent choisi parmi -NH-, NHR'-, -CHN-, -O-, -CHN-, -COO-,
- Ar est un groupe aromatique substitué par au moins un radical OH et pouvant être substitué par au moins un radical hydrocarboné contenant de 1 à 4 atomes de carbone et pouvant comporter un hétéroatome, de préférence Ar étant un groupe phénol, et
- R' est un radical alkyle linéaire ou ramifié ayant de 1 à 4 atomes de carbone.

10. Composition réticulable selon l'une quelconque des revendications 1 à 9, **caractérisée en ce que** le polyisocyanate est préparé à partir de polyméthylène diisocyanate ou de ses dérivés.

11. Composition réticulable selon la revendication 10, **caractérisée en ce que** le polyméthylène diisocyanate est le tétraméthylène diisoicyanate ou l'hexaméthylène diisocyanate.

12. Procédé de préparation d'un film polyuréthanne par traitement thermique à partir d'une composition réticulable selon l'une des revendications 1 à 11, **caractérisé en ce que** le procédé comprend les étapes consistant à :
(1) mélanger le solvant, l'oligomère hydroxylé et l'huile silicone,
(2) ajouter et mélanger le polyisocyanate au mélange obtenu en (1),
(4) étaler le mélange sur la surface à revêtir, et
(5) sécher le mélange étalé puis le cuire à une température comprise entre 50°C et 200°C, pendant 20 minutes à 1 heure.

13. Procédé de préparation d'un film polyuréthanne selon la revendication 12, **caractérisé en ce qu'**au moins une fraction de l'huile silicone est additionnée au polyisocyanate avant l'étape (2).

14. Procédé de préparation d'un film polyuréthanne selon l'une quelconque des revendications 12 ou 13, **caractérisé en ce que** la préparation du film polyuréthanne s'effectue en présence d'un catalyseur, de préférence ajouté avant l'addition de polyisocyanate.

15. Procédé de préparation d'un film polyuréthanne selon la revendication 14, **caractérisé en ce que** la préparation du film polyuréthanne s'effectue en présence d'un catalyseur, de préférence ajouté avant l'addition de polyisocyanate.

16. Procédé de préparation d'un film polyuréthanne selon la revendication 15, **caractérisé en ce que** le catalyseur est le dilauréate de dibutylétain.

17. Film polyuréthanne susceptible d'être obtenu à partir des compositions réticulables selon l'une des revendications 1 à 11.

18. Film polyuréthanne selon la revendication 17, **caractérisée en ce que** le film polyuréthanne est obtenu par durcissement thermique de la composition réticulable.

19. Utilisation de la composition réticulable selon l'une des revendications 1 à 11 pour la préparation de films polyuréthannes.

20. Utilisation selon la revendication 19, **caractérisée en ce que** la composition réticulable est durcie thermiquement lors de la préparation des films polyuréthannes.

21. Utilisation selon la revendication 19 ou 20, **caractérisée en ce que** le film polyuréthanne est un revêtement de protection.

22. Objet recouvert d'un film polyuréthanne obtenu à partir de composition réticulable selon la revendication 1 à 11.

23. Objet recouvert d'un film polyuréthanne selon la revendication 17 ou 18.

## Claims

1. Crosslinkable composition comprising the following compounds:
(a) 20 to 50 weight % of polyisocyanate,
(b) 50 to 80 weight % of acrylic oligomer comprising hydroxyl groups, the content by weight of which with respect to the acrylic oligomer is between 2.5 and 4.5%,
(c) 1 to 10 weight % of a silicone oil of formula (I): 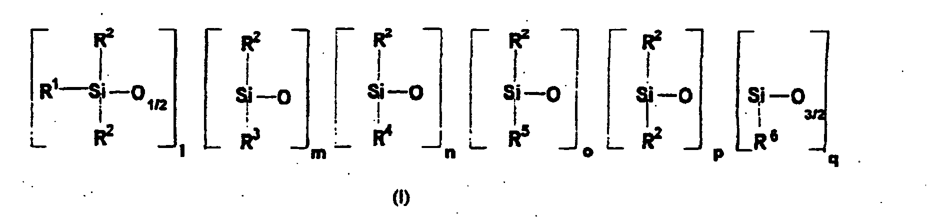
in which:
(1) o and p are identical or different integers of between 1 and 100 and preferably from 1 to 50,
(2) l represents an integer suoh that 1 = 2 + q,
(3) q represents an integer of between 0 and 10,
(4) m represents an integer of between 1 and 60, preferably between 1 and 30, particularly preferably from 1 to 10,
(5) n is an integer such that 20 < (100 × m)/(m + n) < 60, preferably 25 < (100 x m)/(m + n) < 55,
(6) the symbols R¹ and R² are identical and/or different and represent a hydrocarbon-comprising radical chosen from linear or branched alkyl radicals having from 1 to 4 carbon atoms, linear or branched alkoxy radicals having from 1 to 4 carbon atoms, aryl radicals or alkylaryl radicals and preferably a methyl radical, a phenyl radical, a methoxy radical or an ethoxy radical,
(7) the symbols R³ and R⁴ are identical and/or different and are chosen from:
- monovalent -(CH₂)ₕ-Si-(R¹)₃ radicals, where h is between 1 and 10, preferably from 1 to 3,
- monovalent aromatic alkylaryl radicals, the linear or branched alkyl part comprising 1 to 4 carbon atoms, the symbol R³ preferably representing the monovalent -CH(CH₃)C₆H₅ radical and the symbol R⁴ preferably representing the monovalent -CH₂CH₂C₆H₅ radical, the level of Si units of the silicone oil modified by these groups varying from 20 to 40%,
(8) the symbols R⁵ and R⁶ are identical and/or different and represent a monovalent functional group chosen from:
- a monovalent primary amine of -R⁷-NH₂ type where R⁷ is a linear, branched or cyclic alkyl radical having from 1 to 6 carbon atoms,
- a monovalent secondary amine of -R⁸-NH-R⁹ type where R⁸ and R⁹, which are identical and/or different, are linear, branched or cyclic alkyl chains having from 1 to 6 carbon atoms,
- a monovalent -(CH₂)ₐ(NHCH₂CH₂)_{b}NH₂ radical where a and b are independent integers:
· a is between 1 and 10, preferably 1 to 3,
· b is between 0 and 10, preferably 0 or 1,
- a monovalent -(CH₂)_{c}(OCH₂CH₂)_{d}(OCH₂CHCH₃)ₑOH radical where c, d and e are independent integers:
· c is between 1 and 20, preferably 1 to 10,
· d is between 0 and 70, preferably 0 to 12,
· e is between 0 and 70, preferably 0 to 15,
- a monovalent -(CH₂)_{f}SH radical where f is an integer which can range from 1 to 10, preferably from 1 to 3,
- a monovalent -(CH₂)_{g}-C(R')₂-OH radical where g is an integer which can range from 1 to 10 and preferably from 1 to 3, and R' represents a hydrocarbon-comprising radical chosen from a linear or branched alkyl radical having from 1 to 4 carbon atoms, aryl radicals and alkylaryl radicals.

2. Crosslinkable composition according to claim 1, **characterized in that** the silicone oil is weakly miscible in the pair composed of the mixture of acrylic oligomer and of polyisocyanate.

3. Crosslinkable composition according to either one of claims 1 and 2 comprising:
- (a) 20 to 40 weight % of polyisocyanate, preferably 30%,
- (b) 60 to 80 weight % of hydroxylated acrylic oligomer, preferably 70%, and
- (c) 1 to 4 weight % of a silicone oil of formula (I), preferably 2 to 3%.

4. Crosslinkable composition according to claim 3, **characterized in that** the acrylic oligomer comprises between 0.1 and 10 weight % of hydroxyl groups and preferably from 1 to 6 weight % and more particularly between 2.5 and 4.5%.

5. Crosslinkable composition according to any one of claims 1 to 4, **characterized in that** the crosslinkable composition comprises a solvent such that the percentage by weight of the compounds (a), (b) and (c) with respect to the crosslinkable composition comprising a solvent is between 40 and 80% and preferably of the order of 50 to 60%.

6. Crosslinkable composition according to one of claims 1 to 5, **characterized in that** a fraction of the symbols R⁶ and R⁵, which are identical and/or different, represent a residue of formula (II): 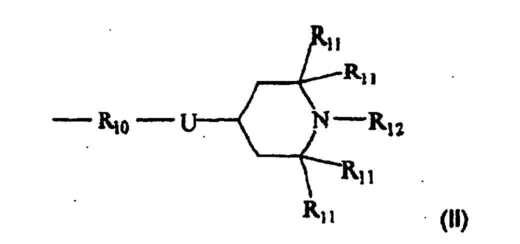 in which:
(1) the monovalent R¹¹ radicals are identical and/or different and are chosen from linear or branched alkyl radicals having 1 to 3 carbon atoms and the phenyl radical;
(2) the monovalent R¹² radical represents a hydrogen radical;
(3) the R¹⁰ radical is a divalent hydrocarbon-comprising radical chosen from:
◆ linear or branched alkylene radicals having 2 to 18 carbon atoms;
◆ alkylenecarbonyl radicals, the linear or branched alkylene part of which comprises 2 to 20 carbon atoms;
◆ alkylenecyclohexylene radicals, the linear or branched alkylene part of which comprises 2 to 12 carbon atoms and the cyclohexylene part of which comprises an OH group and optionally 1 or 2 alkyl radicals having 1 to 4 carbon atoms;
◆ radicals of formula -R¹³-O-R¹³- in which the R¹³ radicals, which are identical or different, represent alkylene radicals having 1 to 12 carbon atoms;
◆ radicals of formula -R¹³-O-R¹³- in which the R¹³ radicals have the meanings indicated above and one of them or both are substituted by one or two -OH group(s);
◆ radicals of formula -R¹³-COO-R¹³- in which the R¹³ radicals have the meanings indicated above;
◆ radicals of formula -R¹⁴-O-R¹⁵-O-CO-R¹⁴- in which the R¹⁴ and R¹⁵ radicals, which are identical and/or different, represent alkylene radicals having 2 to 12 carbon atoms and the R¹⁰ radical is optionally substituted by a hydroxyl radical;
◆ U represents -0- or -NR¹⁶-, R¹⁶ being a radical chosen from a hydrogen atom, a linear or branched alkyl radical comprising 1 to 6 carbon atoms and a divalent radical of formula (III): 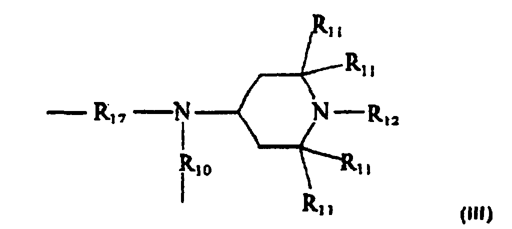 in which R¹⁰ has the meaning indicated above, R¹¹ and R¹² have the meanings indicated above and R¹⁷ represents a linear or branched divalent alkylene radical having from 1 to 12 carbon atoms, one of the valence bonds (that of R¹⁷) being connected to the atom of -NR¹⁶- and the other (that of R¹⁰) being connected to a silicon atom.

7. Crosslinkable composition according to claim 6, **characterized in that** the ratio of the number of functional groups of formula (II) to the number of Si units of the silicone oil is between 5 and 15% and preferably of the order of 6%.

8. Crosslinkable composition according to either one of claims 6 and 7, **characterized in that** the monovalent R¹² radical of the formula (II) and/or (III) represents a hydrogen radical or the R⁵ or O· radical.

9. Crosslinkable composition according to any one of claims 1 to 8, **characterized in that** a fraction of the symbols R¹ and R⁵, which are identical and/or different, represent -(CH₂)ₙ-(V)(Ar) hydroxyaryl units, where:
- n is between 1 and 10,
- the V radicals are identical and/or different and represent a divalent radical chosen from -NH-, - NHR'-, -CHN-, -O- or -COO-,
- Ar is an aromatic group substituted by at least one OH radical which can be substituted by at least one hydrocarbon-comprising radical comprising from 1 to 4 carbon atoms which can comprise a heteroatom, Ar preferably being a phenol group, and
- R' is a linear or branched alkyl radical having from 1 to 4 carbon atoms.

10. Crosslinkable composition according to any one of claims 1 to 9, **characterized in that** the polyisocyanate is prepared from polymethylene diisocyanate or from its derivatives.

11. Crosslinkable composition according to claim 10, **characterized in that** the polymethylene diisocyanate is tetramethylene diisocyanate or hexamethylene diisocyanate.

12. Process for the preparation of a polyurethane film by heat treatment from a crosslinkable composition according to one of claims 1 to 11, **characterized in that** the process comprises the stages consisting in:
(1) mixing the solvent, the hydroxylated oligomer and the silicone oil,
(2) adding the polyisocyanate to and mixing with the mixture obtained in (1),
(4) spreading the mixture over the surface to be coated, and
(5) drying the spread mixture and then curing it at a temperature of between 50°C and 200°C for 20 minutes to 1 hour.

13. Process for the preparation of a polyurethane film according to claim 12, **characterized in that** at least a fraction of the silicone oil is added to the polyisocyanate before stage (2).

14. Process for the preparation of a polyurethane film according to either one of claims 12 and 13, **characterized in that** the polyurethane film is prepared in the presence of a catalyst, preferably added before the addition of polyisocyanate.

15. Process for the preparation of a polyurethane film according to claim 14, **characterized in that** the polyurethane film is prepared in the presence of a catalyst, preferably added before the addition of polyisocyanate.

16. Process for the preparation of a polyurethane film according to claim 15, **characterized in that** the catalyst is dibutyltin dilaurate.

17. Polyurethane film which can be obtained from the crosslinkable compositions according to one of claims 1 to 11.

18. Polyurethane film according to claim 17, **characterized in that** the polyurethane film is obtained by thermal curing of the crosslinkable composition.

19. Use of the crosslinkable composition according to one of claims 1 to 11 in the preparation of polyurethane films.

20. Use according to claim 19, **characterized in that** the crosslinkable composition is thermally cured during the preparation of the polyurethane films.

21. Use according to claim 19 or 20, **characterized in that** the polyurethane film is a protective coating.

22. Item covered with a polyurethane film obtained from the crosslinkable composition according to claims 1 to 11.

23. Item covered with a polyurethane film according to claim 17 or 18.

## Patentansprüche

1. Vernetzbare Zusammensetzung, umfassend die folgenden Verbindungen:
(a) 20 bis 50 Gew.-% Polyisocyanat,
(b) 50 bis 80 Gew.-% Acryloligomer mit Hydroxylgruppen, deren Gewichtsgehalt, bezogen auf das Acryloligomer, zwischen 2,5 und 4,5 % liegt,
(c) 1 bis 10 Gew.-% eines Siliconöls der Formel (I): 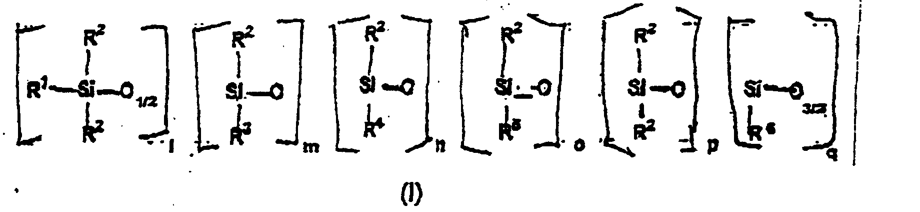
worin:
(1) o und p gleiche oder verschiedene ganze Zahlen zwischen 1 und 100 und vorzugsweise von 1 bis 50 sind,
(2) l eine ganze Zahl darstellt, so dass l = 2 + q,
(3) q eine ganze Zahl zwischen 0 und 10 darstellt,
(4) m eine ganze Zahl zwischen 1 und 60, vorzugsweise zwischen 1 und 30, speziell vorzugsweise von 1 bis 10 darstellt,
(5) n eine ganze Zahl ist, so dass 20 < (100 x m)/(m + n) < 60, vorzugsweise 25 < (100 x m)/(m + n) < 55,
(6) die Symbole R¹ und R² gleich und/oder verschieden sind und einen Kohlenwasserstoffrest, der ausgewählt ist unter den linearen oder verzweigten Alkylresten mit 1 bis 4 Kohlenstoffatomen, den linearen oder verzweigten Alkoxyresten mit 1 bis 4 Kohlenstoffatomen, den Arylresten, den Alkylarylresten, und bevorzugt einen Methylrest, einen Phenylrest, einen Methoxyrest oder einen Ethoxyrest darstellen,
(7) die Symbole R³ und R⁴ gleich und/oder verschieden sind und ausgewählt sind unter:
- den einwertigen Resten -(CH₂)ₕ-Si-(R¹)₃, worin h zwischen 1 und 10 liegt, vorzugsweise 1 bis 3 ist,
- den einwertigen aromatischen Alkylarylresten, wobei der lineare oder verzweigte Alkylteil 1 bis 4 Kohlenstoffatome enthält, das Symbol R³ vorzugsweise den einwerigen Rest -CH(CH₃)C₆H₅ darstellt und das Symbol R⁴ den einwertigen Rest -CH₂CH₂C₆H₅ darstellt, der Gehalt an durch diese Gruppen modifizierten Si-Einheiten des Siliconöls von 20 bis 40 % variiert.
(8) die Symbole R⁵ und R⁶ gleich und/oder verschieden sind und eine einwertige funktionelle Gruppe darstellen, die ausgewählt ist unter:
- einem einwertigen primären Amin vom Typ -R⁷-NH₂, worin R⁷ ein linearer, verzweigter oder cyclischer Alkylrest mit 1 bis 6 Kohlenstoffatomen ist,
- einem einwertigen sekundären Amin vom Typ -R⁸-NH-R⁹, worin R⁸ und R⁹, die gleich und/oder verschieden sind, lineare, verzweigte oder cyclische Alkylketten mit 1 bis 6 Kohlenstoffatomen sind,
- einem einwertigen Rest -(CH₂)ₐ(NHCH₂CH₂)_{b}NH₂, worin c und d unabhängige ganze Zahlen sind:
- a liegt zwischen 1 und 10, vorzugsweise 1 bis 3,
- b liegt zwischen 0 und 10, vorzugsweise 0 bis 1,
- einem einwertigen Rest -(CH₂)_{c}(OCH₂CH₂)_{d}(OCH₂CHCH₃)ₑOH, worin c, d und e unabhängige ganze Zahlen sind:
- c liegt zwischen 1 und 20, vorzugsweise 1 bis 10,
- d liegt zwischen 0 und 70, vorzugsweise 0 bis 12,
- e liegt zwischen 0 und 70, vorzugsweise 0 bis 15,
- einem einwertigen Rest -(CH₂)_{f}SH, worin f eine ganze Zahl ist, die von 1 bis 10, vorzugsweise 1 bis 3 gehen kann,
- einem einwertigen Rest -(CH₂)_{g}-C(R')₂-OH, worin g eine ganze Zahl ist, die von 1 bis 10 und vorzugsweise von 1 bis 3 gehen kann, und R' einen Kohlenwasserstoffrest darstellt, der ausgewählt ist unter einem linearen oder verzweigten Alkylrest mit 1 bis 4 Kohlenstoffatomen, den Arylresten und den Alkylarylresten.

2. Vernetzbare Zusammensetzung gemäß Anspruch 1, **dadurch gekennzeichnet, dass** das Siliconöl mit dem aus dem Gemisch von Acryloligomer und Polyisocyanat bestehenden Paar wenig mischbar ist.

3. Vernetzbare Zusammensetzung gemäß einem der Ansprüche 1 oder 2, umfassend:
- (a) 20 bis 40 Gew.-% Polyisocyanat, vorzugsweise 30 %,
- (b) 60 bis 80 Gew.-% Hydroxylacryloligomer, vorzugsweise 70 % und
- (c) 1 bis 4 Gew.-% eines Siliconöls der Formel (I), vorzugsweise 2 bis 3 %.

4. Vernetzbare Zusammensetzung gemäß Anspruch 3, **dadurch gekennzeichnet, dass** das Acryloligomer zwischen 0,1 und 10 Gew.-% und vorzugsweise 1 bis 6 Gew.-% und spezieller zwischen 2,5 und 4,5 % Hydroxylgruppen enthält.

5. Vernetzbare Zusammensetzung gemäß einem der Ansprüche 1 bis 4, **dadurch gekennzeichnet, dass** die vernetzbare Zusammensetzung ein Lösungsmittel enthält, so dass der Gewichtsprozentgehalt der Verbindungen (a), (b) und (c), bezogen auf die ein Lösungsmittel enthaltende vernetzbare Zusammensetzung, zwischen 40 und 80 % und vorzugsweise in der Größenordnung von 50 bis 60 % liegt.

6. Vernetzbare Zusammensetzung gemäß einem der Ansprüche 1 bis 5, **dadurch gekennzeichnet, dass** ein Teil der Symbole R⁶ und R⁵, die gleich und/oder verschieden sind, einen Rest der Formel (II): 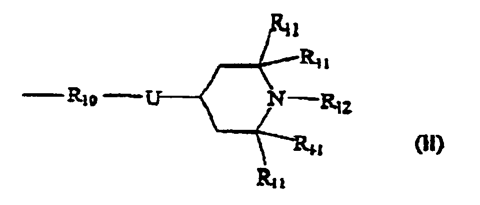 darstellt, worin:
(1) die einwertigen Reste R¹¹ gleich und/oder verschieden sind, ausgewählt unter den linearen oder verzweigten Alkylresten mit 1 bis 3 Kohlenstoffatomen und dem Phenylrest;
(2) der einwertige Rest R¹² einen Wasserstoffrest darstellt;
(3) der Rest R¹⁰ ein zweiwertiger Kohlenwasserstoffrest ist, der ausgewählt ist unter:
◆ den linearen oder verzweigten Alkylenresten mit 2 bis 18 Kohlenstoffatomen;
◆ den Alkylen carbonylresten, deren linearer oder verzweigter Alkylenteil 2 bis 20 Kohlenstoffatome umfasst;
◆ den Alkylen-cyclohexylenresten, deren linearer oder verzweigter Alkylenteil 2 bis 12 Kohlenstoffatome umfasst und deren Cyclohexylenteil eine OH-Gruppe und gegebenenfalls 1 oder 2 Alkylreste mit 1 bis 4 Kohlenstoffatomen umfasst;
◆ den Resten der Formel -R¹³-O-R¹³, worin die Reste R¹³, die gleich oder verschieden sind, Alkylenreste mit 1 bis 12 Kohlenstoffatomen darstellen;
◆ den Resten der Formel -R¹³-O-R¹³, worin die Reste R¹³ die zuvor angegebenen Bedeutungen haben und einer von ihnen oder beide mit einer oder zwei -OH-Gruppe(n) substituiert sind;
◆ den Resten der Formel -R¹³-COO-R¹³, worin die Reste R¹³ die zuvor angegebenen Bedeutungen haben;
◆ den Resten der Formel -R¹⁴-O-R¹⁵-O-CO-R¹⁴, worin die Reste R¹⁴ und R¹⁵, die gleich und/oder verschieden sind, Alkylenreste mit 2 bis 12 Kohlenstoffatomen darstellen und der Rest R¹⁰ gegebenenfalls mit einem Hydroxylrest substituiert ist;
◆ U -O- oder -NR¹⁶- darstellt, wobei R¹⁶ ein Rest ist, der ausgewählt ist unter einem Wasserstoffatom, einem linearen oder verzweigten Alkylrest mit 1 bis 6 Kohlenstoffatomen und einem zweiwertigen Rest der Formel (III): 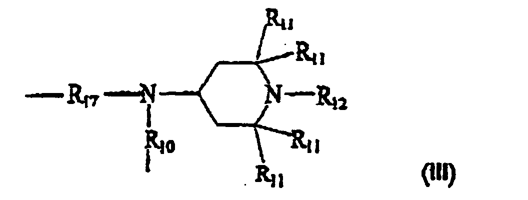 worin R¹⁰ die zuvor angegebene Bedeutung hat, R¹¹ und R¹² die zuvor angegebenen Bedeutungen haben und R¹⁷ einen zweiwertigen, linearen oder verzweigten Alkylenrest mit 1 bis 12 Kohlenstoffatomen darstellt, wobei eine der Valenzbindungen (die von R¹⁷) an das Atom von -NR¹⁶- gebunden ist, die andere (die von R¹⁰) an ein Siliciumatom gebunden ist.

7. Vernetzbare Zusammensetzung gemäß Anspruch 6, **dadurch gekennzeichnet, dass** das Verhältnis Anzahl an funktionellen Gruppen der Formel (II)/Anzahl an Si-Einheiten des Siliconöls zwischen 5 und 15 % und vorzugsweise in der Größenordnung von 6 % liegt.

8. Vernetzbare Zusammensetzung gemäß einem der Ansprüche 6 oder 7, **dadurch gekennzeichnet, dass** der einwertige Rest R¹² der Formel (II) und/oder (III) einen Wasserstoffrest, den Rest R⁵ oder O darstellt.

9. Vernetzbare Zusammensetzung gemäß einem der Ansprüche 1 bis 8, **dadurch gekennzeichnet, dass** ein Teil der Symbole R¹ und R⁵, die gleich oder verschieden sind, Hydroxyaryleinheiten -(CH₂)n-(V)(Ar) darstellt, worin:
- n zwischen 1 und 10 liegt,
- die Reste V gleich und/oder verschieden sind und einen zweiwertigen Rest darstellen, der ausgewählt ist unter -NH-, -NHR'-, -CHN-, -O-, -CHN-, -COO-,
- Ar eine aromatische Gruppe ist, die mit wenigstens einem OH-Rest substituiert ist und mit wenigstens einem Kohlenwasserstoffrest mit 1 bis 4 Kohlenstoffatomen substituiert sein kann und ein Heteroatom umfassen kann, wobei Ar vorzugsweise eine Phenolgruppe ist, und
- R' ein linearer oder verzweigter Alkylrest mit 1 bis 4 Kohlenstoffatomen ist.

10. Vernetzbare Zusammensetzung gemäß einem der Ansprüche 1 bis 9, **dadurch gekennzeichnet, dass** das Polyisocyanat aus Polymethylendiisocyanat oder seinen Derivaten hergestellt wird.

11. Vernetzbare Zusammensetzung gemäß Anspruch 10, **dadurch gekennzeichnet, dass** das Polymethylendiisocyanat Tetramethylendiisocyanat oder Hexamethylendiisocyanat ist.

12. Verfahren zur Herstellung eines Polyurethanfilms durch thermische Behandlung ausgehend von einer vernetzbaren Zusammensetzung gemäß einem der Ansprüche 1 bis 11, **dadurch gekennzeichnet, dass** das Verfahren die Stufen umfasst, die darin bestehen:
(1) das Lösungsmittel, das Hydroxyloligomer und das Siliconöl zu mischen,
(2) das Polyisocyanat zu dem in (1) erhaltenen Gemisch zuzufügen und zu mischen,
(4) das Gemisch auf der zu beschichtenden Oberfläche aufzutragen und
(5) das aufgetragene Gemisch zu trocknen, es dann bei einer Temperatur zwischen 50 °C und 200 °C 20 Minuten bis 1 Stunde lang zu härten.

13. Verfahren zur Herstellung eines Polyurethanfilms gemäß Anspruch 12, **dadurch gekennzeichnet, dass** wenigstens ein Teil des Siliconöls dem Polyisocyanat vor der Stufe (2) zugegeben wird.

14. Verfahren zur Herstellung eines Polyurethanfilms gemäß einem der Ansprüche 12 oder 13, **dadurch gekennzeichnet, dass** die Herstellung des Polyurethanfilms in Gegenwart eines Katalysators erfolgt, der vorzugsweise vor der Zugabe von Polyisocyanat zugefügt wird.

15. Verfahren zur Herstellung eines Polyurethanfilms gemäß Anspruch 14, **dadurch gekennzeichnet, dass** die Herstellung des Polyurethanfilms in Gegenwart eines Katalysators erfolgt, der vorzugsweise vor der Zugabe von Polyisocyanat zugefügt wird.

16. Verfahren zur Herstellung eines Polyurethanfilms gemäß Anspruch 15, **dadurch gekennzeichnet, dass** der Katalysator Dibutylzinndilaurat ist.

17. Polyurethanfilm, der aus den vernetzbaren Zusammensetzungen gemäß einem der Ansprüche 1 bis 11 erhalten werden kann.

18. Polyurethanfilm gemäß Anspruch 17, **dadurch gekennzeichnet, dass** der Polyurethanfilm durch thermisches Härten der vernetzbaren Zusammensetzung erhalten wird.

19. Verwendung der vernetzbaren Zusammensetzung gemäß einem der Ansprüche 1 bis 11 für die Herstellung von Polyurethanfilmen.

20. Verwendung gemäß Anspruch 19, **dadurch gekennzeichnet, dass** die vernetzbare Zusammensetzung bei der Herstellung der Polyurethanfilme thermisch gehärtet wird.

21. Verwendung gemäß Anspruch 19 oder 20, **dadurch gekennzeichnet, dass** der Polyurethanfilm eine Schutzbeschichtung ist.

22. Mit einem Polyurethanfilm, der aus vernetzbarer Zusammensetzung gemäß Anspruch 1 bis 11 erhalten wird, beschichteter Gegenstand.

23. Mit einem Polyurethanfilm gemäß Anspruch 17 oder 18 beschichteter Gegenstand.
